# EUROPÄISCHE PATENTSCHRIFT

(11) **EP 0 425 605 B1**
(45) Veröffentlichungstag und Bekanntmachung des Hinweises auf die Patenterteilung: **01.06.1994**
(21) Anmeldenummer: 90905510.5
(22) Anmeldetag: 09.04.1990
(51) Int. Cl.: F16B 13/04

(54) **SCHWERLAST-HOHLRAUMANKER**
HEAVY-DUTY DOWEL
CHEVILLE POUR SERVICE SEVERE

(30) Priorität: 02.05.1989 DE 3914507
(43) Veröffentlichungstag der Anmeldung: 08.05.1991
(73) Patentinhaber: Liebig, Heinrich, D-64319 Pfungstadt (DE)
(72) Erfinder: Liebig, Heinrich, D-64319 Pfungstadt (DE)
(74) Vertreter: Helber, Friedrich G., Dipl.-Ing.
(86) Internationale Anmeldenummer: EP9000556
(87) Internationale Veröffentlichungsnummer: WO9013751

(56) Entgegenhaltungen:
- DE-A- 2 549 868
- DE-A- 2 824 491
- US-A- 2 908 196

## Beschreibung

Die Erfindung betrifft einen Hohlraum-Anker mit einem zumindest über einen Teil seiner Länge mit Gewinde versehenen Ankerbolzen, an dessen im Hohlraum zu verankerndem Ende ein langgestrecktes Verriegelungselement zwischen zwei langgestreckten parallelen, an ihrem Verriegelungselement abgewandten Ende durch einen Steg verbundenen Laschen zwischen einer zum Ankerbolzen fluchtend ausgerichteten Einführstellung und einer quer zum Ankerbolzen verlaufenden Verriegelungsstellung verschwenkbar gehaltert ist, wobei das Verriegelungselement von einer Gewindebohrung durchsetzt wird, deren Mittelachse in der Verriegelungsstellung mit der Längsmittelachse des Ankerbolzens fluchtet.

Zur Befestigung von äußeren Belastungen unterliegenden Werkstücken oder Bauteilen sind sogen. "Kippdübel" entwickelt worden, die zur Befestigung von relativ leichten und geringen äußeren Belastungen unterliegenden Werkstücken an hohlen Wänden, z.B. mit Abstand vor der eigentlichen massiven Wand vorgehängte Verblendwänden, wie Gipskarton-Platten o.dgl., oder auch in unter Verwendung von Hohlblocksteinen mit Luftkammern aufgebauten Wänden Verwendung finden. Der bei diesen Kippdübeln in der Regel außen mit einem Schraubenkopf versehene Ankerbolzen ist in eine Gewindebohrung in einem kurzen querverlaufenden Bolzen eingeschraubt, der seinerseits das als profiliertes Blech-Preßteil ausgebildete Verriegelungselement derart verschwenkbar lagert, daß es aus einer in Anlage an den Ankerbolzen angekippten Einführlage in eine rechtwinklig zum Anker verlaufende Verriegelungslage verschwenkbar- oder kippbar ist. Das Einsetzen des Kippdübels in die Befestigungsbohrung erfolgt in der erwähnten Einführlage, wobei der in die Gewindebohrung des kurzen Bolzens eingeschraubte Ankerbolzen so lange bemessen ist, daß er um das für das Verschwenken des Verriegelungselements erforderliche Maß in den Hohlraum vorschiebbar ist. Nach dem Einführen in die Befestigungsbohrung wird das Verriegelungselement dann durch Manipulation des Ankerbolzens um 90⁰ in die Verriegelungslage verschwenkt. Der Ankerbolzen wird dann weiter bis in Anlage seines am bohrungsäußeren Ende vorgesehenen Schraubenkopfs bzw. einer unter diesem Kopf angeordneten Unterlegscheibe an einem an der hohlen Wand zu befestigendes Werkstück in den Hohlraum eingeschraubt, wobei das Verriegelungselement gegen die den Hohlraum begrenzende Innenfläche der hohlen Wand gespannt wird. Auf diese Weise wird eine, keinerlei radial gerichteten Spreizdruck auf die Wandung der Befestigungsbohrung ausübende formschlüssige Halterung des Kippdübels und somit eine sichere Befestigung des mit dem Kippdübel zu befestigenden Werkstücks auf der Hohlwand bewirkt.

Als Weiterentwicklung dieser Kippdübel können Anker der eingangs erwähnten Art (DE-A 2 549 868; US-A 2 908 196) angesehen werden, bei welchen die beiden das Verriegelungselement halternden Laschen an einem langgestreckten Steckkörper ausgebildet sind, der mit zwischen die Laschen verschwenktem Verriegelungselement bis zur Anlage an einem an seinem äußeren Ende vorgesehenen, im Durchmesser vergrößerten scheibenförmigen Anlageflansch in die in den Hohlraum führende Bohrung einsteckbar ist. Dann wird der Schaft einer Schraube durch eine nicht mit Gewinde versehene glatte Bohrung in den Steckkörper eingeschoben bis deren Vorderende an einer Abschrägung der zugewandten Stirnseite des Verriegelungselements anstößt und das Verriegelungselement dann durch die Schraube in eine rechtwinklig zum Steckkörper verlaufende Lage in den Hohlraum verkippt werden kann, in welcher der Schraubenschaft in eine dann fluchtend zu ihm ausgerichtete Gewindebohrung des Verriegelungselements eingeschraubt werden kann. Der Steckkörper der so ausgebildeten Hohlraum-Anker muß insbesondere dann relativ lang ausgebildet werden, wenn er für Befestigungszwecke an Wänden unterschiedlicher Dicke bis zum Hohlraum eingesetzt werden soll. Neben der Möglichkeit der Verschwenkung in den ausgekippten Verriegelungszustand muß das Verriegelungselement zwischen den Laschen auch zurückgezogen werden können, bis es an der den Hohlraum begrenzenden Innenfläche anliegt. D.h. die Halterung des Verriegelungselements zwischen den Laschen ist keine reine Schwenklagerung, sondern muß über die Verschwenkung hinaus auch eine Längsverschiebung des Lagerzapfens des Verriegelungselements ermöglichen. Die bekannten Hohlraumanker weisen daher nicht nur relativ lange Steckkörper auf, sondern sind auch vergleichsweise kompliziert aufgebaut. Außerdem ist der Gewindeschaft der Schraube beim Setzen des Ankers nicht fest mit dem Verriegelungselement verbunden, so daß die eigentliche Befestigungsschraube auch verlorengehen kann.

Der Erfindung liegt die Aufgabe zugrunde, unter Anwendung des Prinzips des verschwenkbaren Verriegelungselemts einen auch für die Befestigung schwerer Lasten und hoher Beanspruchungen geeigneten Hohlraum-Anker zu schaffen, der relativ einfach aufgebaut und kostengünstig herstellbar und dabei so ausgebildet ist, daß das Verschwenken des Verriegelungselements aus der Einführ- in die Verriegelungslage zwangsläufig erfolgt, ohne daß hierfür zeitaufwendige und unsichere Manipulationen über den Ankerbolzen ausgeführt werden müssen.

Ausgehend von einem Hohlraum-Anker der eingangs erwähnten Art wird diese Aufgabe erfindungsgemäß dadurch gelöst, daß im Steg eine Gewindebohrung vorgesehen ist, in welche das mit Gewinde versehene Vorderende des Ankerschafts eingechraubt ist.

In einer bevorzugten Ausführungsform der Erfindung wird das Verriegelungselement von einem langgestreckten, in der Draufsicht im wesentlichen rechteckigen Abschnitt eines auch im Querschnitt rechteckigen Metallprofils gebildet, wobei die freien Enden der Laschen die seitlichen Begrenzungsflächen des Metallprofil-Abschnitts in diesem mittleren Bereich übergreifen und verschwenkbar haltern, und die Gewindebohrung den Metallprofil-Abschnitt in dessen mittlerem Bereich rechtwinklig zur Schwenkachse von der oberen zur unteren Flachseite mittig durchsetzt. Durch die Halterung des als Metallprofil-Abschnitt ausgebildeten Verriegelungselements zwischen den Laschen, welche in der Einführlage das Vorderende des Ankerbolzens um das zum Kippen des Verriegelungselements erforderliche Maß überragen, ist es möglich, das als Metallprofil-Abschnitt ausgebildete Verriegelungselement relativ massiv auszubilden, so daß es - in der Verriegelungsstellung - hohe Belastungen großflächig auf die Innenfläche der hohlen Wand zu übertragen vermag. Nach der Verschwenkung des Verriegelungselements in die Verriegelungslage wird der Ankerbolzen in die Gewindebohrung im Verriegelungselement eingeschraubt, so daß dann also in den Ankerbolzen eingeleitete Kräfte direkt über die Gewindeverbindung zwischen dem Ankerbolzen und dem Verriegelungselement übertragen werden. D.h. die Laschen dienen lediglich zur verschwenkbaren Halterung des Verriegelungselements und sind nicht an der Übertragung der Befestigungskräfte beteiligt. Daher können die Laschen und der sie halternde Steg als Stanz-Preßteil aus relativ dünnem Blechmaterial hergestellt werden.

Um die erwähnte zwangsläufige Verschwenkung des Verriegelungselements nach dem Einführen in die Befestigungsbohrung zu bewirken empfiehlt es sich, eine der querverlaufenden Stirnflächen des das Verriegelungselement bildenden Metallprofil-Abschnitts als zu den Flachseiten geneigt verlaufende Anlauf-Schrägfläche für das durch den Laschen-Steg geschraubte Vorderende des Ankerbolzens auszubilden.

Dabei hat es sich als zweckmäßig erwiesen, wenn die Anlauf-Schrägfläche etwa unter einem Winkel von 40 bis 50°, vorzugsweise unter etwa 45°, zu den Flachseiten des das Verriegelungselement bildenden Metallprofil-Abschnitts verläuft.

In seinem durch den Laschen-Steg geschraubten vorderen Endbereich ist der Ankerbolzen zweckmäßig mit einem gewindelosen Abschnitt versehen, dessen Durchmesser etwa dem Kerndurchmesser des Gewindes des Ankerbolzens entspricht, wobei die Länge des gewindelosen Abschnitts wenigstens gleich der zwischen den Flachseiten gemessenen Dicke des das Verriegelungselement bildenden Metallprofils, vorzugsweise auch etwas länger ist. Dadurch wird einerseits sichergestellt, daß in dem das Verschwenken des Verriegelungselements bewirkenden vorderen Ende des Ankerbolzens keine Gewindegänge beschädigt werden können. Die spezielle Bemessung des Durchmessers des gewindelosen Abschnitts andererseits gewährleistet außerdem, daß dieser Abschnitt beim Eindringen in die Gewindebohrung im Verriegelungsabschnitt an den Gewindegängen dieser Gewindebohrung geführt wird, wodurch eine Ausrichtung der Gewindebohrung zum nachfolgenden, mit Gewinde versehenen Abschnitt des Ankerbolzens derart erreicht wird, daß das Ankerbolzen-Gewinde beschädigungsfrei in die Gewindebohrung im Verriegelungselement einläuft. Die zwangsläufige Verschwenkung des Verriegelungselements aus der Einführ- in die Verriegelungslage kann außerdem dadurch gefördert werden, daß das freie Ende des gewindelosen Abschnitts des Ankerbolzens sich kegelförmig verjüngt, wobei es dann zusätzlich zweckmäßig ist, die Gewindebohrung im Verriegelungselement wenigstens in dem in der infolge des schrägen Verlaufs der Anlauf-Schrägfläche des Metallprofil-Abschnitts kürzeren Flachseite mündenden Ende anzusenken.

In der Praxis hat sich außerdem gezeigt, daß es zweckmäßig ist, die Schwenkachse des Verriegelungselements und die Längsmittelachse ihrer Gewindebohrung etwas zueinander zu versetzen, um zu verhindern, daß das durch die Gewindebohrung im Mittelbereich ohnehin geschwächte Verriegelungselement noch zusätzlich im schwächsten Bereich durch Bohrungen für Schwenkzapfen o.dgl. geschwächt werden müssen.

Die Länge der Laschen wird zweckmäßig so gewählt, daß der Metallprofil-Abschnitt in eine Lage zwischen den Laschen verschwenkbar ist, in welcher die seitlichen Begrenzungsflächen fluchtend zwischen den Laschen liegen und die Anlauf-Schrägfläche am durch die Gewindebohrung im Laschensteg hindurchgeschraubten Vorderende des Ankerbolzens anliegt.

Da der Durchmesser der Befestigungsbohrung, in welcher der erfindungsgemäße Hohlraum-Anker befestigt werden soll, aufgrund der Breite des Verriegelungselements sowie der dieses halternden Laschen deutlich größer als der Durchmesser des Ankerbolzens bemessen sein muß, empfiehlt es sich, am verriegelungsabgewandten Ende des Ankerbolzens eine aufschiebbare Büchse vorzusehen, deren Innendurchmesser etwa dem Außendurchmesser des Gewindes des Ankerbolzens entspricht bzw. geringfügig größer ist während ihr Außendurchmesser etwa gleich bzw. geringfügig kleiner als der Durchmesser der Befestigungsbohrung ist, in welche der Hohlraum-Anker eingeführt werden soll. Die Büchse zentriert den Ankerbolzen also in der Bohrung und hält auch eventuell von einem auf der Wand befestigten Werkstück auf den Hohlraum-Anker ausgeübte Scherbeanspruchungen vom Ankerbolzen fern. Das verriegelungselementabgewandte Ende der vorerwähnten, den Ankerbolzen zenntrierenden und Scherbeanspruchungen aufnehmenden Büchse ist zweckmäßig mit einer mit der Büchse zu einer integralen Einheit verbundenen Unterlegscheibe versehen, deren Durchmesser größer als der Durchmesser der Befestigungsbohrung ist. Dadurch wird verhindert, daß die Büchse versehentlich zu weit in die Befestigungsbohrung geschoben werden kann und dann ihre Zentrier- und/oder Aufnahmefunktion für Scherbeanspruchungen nicht mehr erfüllen kann.

Die Erfindung ist in der folgenden Beschreibung eines Ausführungsbeispiels in Verbindung mit der Zeichnung näher erläutert, und zwar zeigt bzw. zeigen:
- Fig. 1: eine Befestigungsanordnung eines Werkstücks auf einer im Schnitt dargestellten hohlen Wand unter Verwendung eines in der Seitenansicht dargestellten erfindungsgemäßen Hohlraum-Ankers;
- Fig. 2: eine teilweise geschnittene bzw. im Bereich des Verriegelungselements aufgebrochene Seitenansicht des in der Befestigungsanordnung gemaß Figur 1 verwendeten Hohlraum-Ankers;
- Fig. 3: eine Ansicht des Hohlraum-Ankers, gesehen in Richtung des Pfeils 3 in Figur 2;
- Fig. 4: eine Draufsicht auf eine beim Setzen des Hohlraum-Ankers bohrungsmündungsseitig vorzusehende, mit einer Unterlegscheibe zu einer Einheit verbundenen Büchse;
- Fig. 5: eine Schnittansicht, gesehen in Richtung der Pfeile 5-5 in Figur 4;
- Fig. 6, 7 und 8: eine Vorder- und eine Seitenansicht des sowie eine Draufsicht auf den zur Halterung des Verriegelungselements am Ankerbolzen dienenden Laschen-Bauteil; und
- Fig. 9a, 9b, und 9c: eine Abfolge von in der Darstellungsweise der Figur 2 entsprechenden Ansichten des bohrungsinneren Endes des Hohlraum-Ankers in aufeinanderfolgenden Stufen der zwangsläufigen Verschwenkung des Verriegelungselements bis in die mit dem Ankerbolzen verschraubte Verriegelungslage.

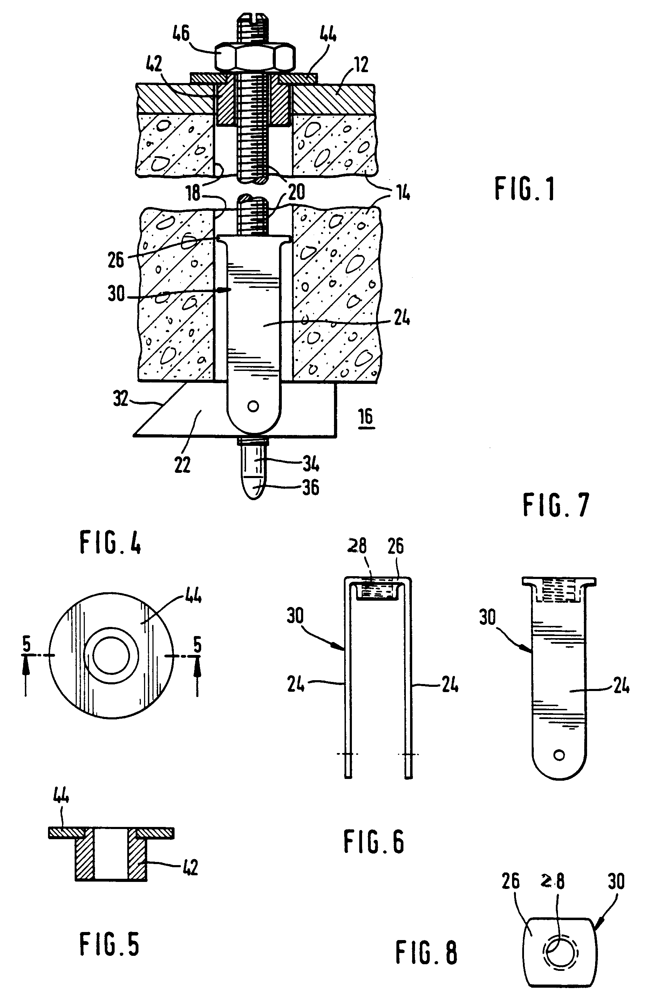

Der in den Figuren 1 bis 3 gezeigte, in seiner Gesamtheit mit 10 bezeichnete erfindungsgemäße Hohlraum-Anker ist zur Befestigung von schweren und gegebenenfalls auch hochbeanspruchten Werkstücken, wie beispielsweise des in Figur 1 nur schematisch als Platte angedeuteten Werkstücks 12 auf einer Wand 14 bestimmt, die entweder einen oder mehrere Hohlräume 16 aufweist, oder deren Rückseite die Begrenzungsfläche eines nicht zugänglichen Hohlraums bildet (Fig. 1). Der Hohlraum-Anker 10 wird in eine von der zugänglichen Vorderseite der Wand 12 bis zum Hohlraum 16 durchgehenden Befestigungsbohrung 18 gesetzt, und weist hierfür einen langgestreckten, mit Gewinde versehenen Ankerbolzen 20 auf, an dessen hohlraumseitigen inneren Ende ein Verriegelungselement 22 zwischen zwei Laschen 24 verschwenkbar gelagert ist, welche ihrerseits rechtwinklig von einem Steg 26 mit einer zum Gewinde des Ankerbolzens 20 komplementären Gewindebohrung 28 abgekantet sind und so ein Laschenbauteil 30 (Fig. 6 bis 8) bilden. Der Ankerbolzen 22 ist durch die Gewindebohrung 28 des Laschenbauteils 30 hindurchschraubbar, wobei die Länge der Laschen 24 so bemessen ist, daß das von einem Abschnitt eines im Querschnitt rechteckigen, langgestreckten, in der Draufsicht ebenfalls im wesentlichen rechteckigen Metallprofils, z.B. einem Abschnitt eines Stabstahls mit Rechteck-Querschnitt gebildete Verriegelungselement 22 in der in Figur 2 und 3 veranschaulichten Weise fluchtend zwischen die Laschen einschwenkbar ist, wenn das bohrungsinnere Vorderende des Ankerbolzens 20 etwas durch die Gewindebohrung 28 hindurchgeschraubt ist und vom Steg 26 noch etwas zwischen die Laschen 24 vortritt.

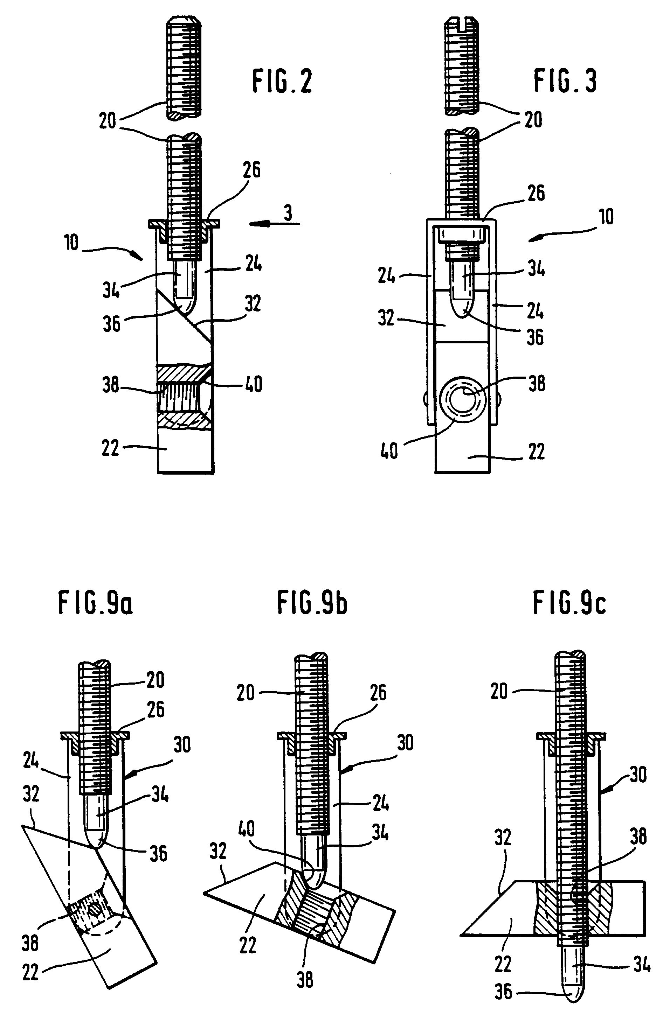

Die am hochgeschwenkten Ende des Verriegelungselements 22 vorgesehene Stirnfläche ist als etwa unter einem Winkel zwischen 40 bis 50° verlaufende Anlauf-Schrägfläche 32 ausgebildet, und insbesondere in den Figuren 2 und 3 ist erkennbar, daß diese Anlauf-Schrägfläche 32 bei einer bestimmten Einschraubtiefe des Vorderendes zwischen die Laschen 24 gerade dann am Vorderende des Ankerbolzens 20 zur Anlage kommt, wenn das Verriegelungselement 22 bündig und fluchtend zwischen den Laschen steht. Dies ist die Einführlage des Verriegelungselements, welche es ermöglicht, den Hohlraum-Anker 10 mit dem Verriegelungselement nach vorn weisend so weit in die mit entsprechendem Durchmesser bemessene Befestigungsbohrung hineinzuschieben, daß das von den Laschen 24 gehaltene Verriegelungselement vollständig in den Hohlraum 16 eintritt. Durch weiteres Einschrauben des Vorderendes des Ankerbolzens 20 in die Gewindebohrung 28 des Stegs 26 des Laschenbauteils 30 kann der Verriegelungsbauteil dann zwangsläufig verschwenkt werden, wie dies in den Figuren 9 veranschaulicht ist. Das Vorderende des Ankerbolzens 20 drückt beim Einschraubvorgang auf die Anlauf/Schrägfläche 32, welche dann in der in Figur 9a veranschaulichten Weise unter Verschwenkung des Verriegelungselements 22 ausweicht, bis das Vorderende des Ankerbolzens auf die an die Anlauf/Schrägfläche anschließende obere Flachseite des Verriegelungselements übertritt und dann diese Flachseite als weitere Anlauf-Fläche zum weiteren Verschwenken des Verriegelungselements benutzt.

Im vorderen Endbereich des Ankerbolzens 20 ist ein gewindeloser Abschnitt 34 durch Abdrehen der Gewindegänge bis auf den Gewinde-Kerndurchmesser gebildet. Außerdem ist das freie Ende 36 dieses gewindelosen Abschnitts 34 kegelig zugespitzt, wobei der Kegelwinkel so gewählt ist, daß in der Einführlage des Verriegelungselements eine Erzeugende, der Kegel-Mantelfläche an der Anlauf-Schrägfläche 32 des Verriegelungselements 22 anliegt.

Das Verriegelungselement 22 wird in dem zwischen den Laschen 24 liegenden Bereich von einer Gewindebohrung 38 (Fig. 3, 9b und 9c) durchsetzt, welche in der rechtwinklig in die in den Figuren 1 und 9c verschwenkten Verriegelungslage des Verriegelungselements 22 zum Vorderende des Ankerbolzens fluchtet, so daß zunächst der gewindelose Abschnitt 34 des Ankerbolzens in die Gewindebohrung 38 eintritt und bei weiterem Einschrauben schließlich das Gewinde des Ankerbolzens mit der Gewindebohrung 38 im Verriegelungselement verschraubt werden kann. Da der gewindelose Abschnitt 34 voraussetzungsgemäß auf das Maß des Kerndurchmessers des Gewindes abgedreht ist und umgekehrt das Gewinde 38 im Verriegelungselement ein komplementäres Gegengewinde zum Gewinde des Ankerbolzens 20 bildet, bildet der gewindelose Abschnitt 34 einen Zentrier-Abschnitt, welcher bei zunehmendem Eindringen in die Gewindebohrung 38 zusammen mit den Spitzen der Gewindegänge der Gewindebohrung 38 zusammenwirkt und das Verriegelungselement so zum Ankerbolzen 20 ausrichtet, daß dessen an den gewindelosen Abschnitt 34 anschließender, mit Gewinde versehener Teil ohne Schwierigkeiten mit der Gewindebohrung 38 in Eingriff kommt. Eine kegelstumpfförmige Ansenkung 40 (Fig. 2, 3 und 9b) der ankerbolzenseitigen Mündung der Gewindebohrung 38 unterstützt im Zusammenwirken mit dem kegelförmigen Vorderende 36 des Ankerbolzens das Einlaufen des Ankerbolzens in die Gewindebohrung.

Sobald der Ankerbolzen soweit in das Verriegelungselement 22 eingeschraubt ist, daß der Gewindeeingriff über die gesamte Länge der Gewindebohrung 38 mit dem Ankerbolzen besteht (Fig. 1 und 9c), ist der Hohlraum-Dübel belastbar und das Verriegelungselement kann in Anlage an die den Hohlraum 16 begrenzte rückwärtige Fläche der Wand 16 angezogen werden.

Zu diesem Zweck wird über das bohrungsmündungsseitige Ende des Ankerbolzens 20 eine Büchse 42 (Fig. 1 und 5) geschoben, deren Dicke so gewählt ist, daß sie den Ankerbolzen im Mündungsbereich mit geringem Spiel in der Befestigungsbohrung 18 zentriert. Die Büchse 42 ist mit einer im Durchmesser vergrößerten Unterlegscheibe 44 zu einem einstückigen Bauteil vereinigt, wobei die Unterlegscheibe 44 die Anzugskraft der auf das Ende des Ankerbolzens 20 aufgeschraubten Mutter 46 (Fig. 1) auf der Oberseite des auf der Wand 14 zu befestigenden Werkstücks 12 abstützt. In Figur 1 ist ersichtlich, daß die Büchse 42 so lang bemessen werden kann, daß sie die Befestigungsbohrung im Werkstück 12 durchsetzt und noch ein Stück in die Befestigungsbohrung 18 eintritt. Dadurch wirkt die Büchse 42 nicht nur als Zentrierbüchse für den Ankerbolzen 20, sondern übernimmt auch eventuell auftretende Scherbeanspruchungen, wenn das Werkstück 12 sich relativ zur Oberfläche der Wand 14 verschieben sollte. D.h. der Ankerbolzen 20 wird in jedem Falle durch die Büchse 42 von Scherkräften entlastet.

In den Figuren 4 und 5 ist die mit der Unterlegscheibe 44 zu einem einstückigen Bauteil vereinigte Büchse 44 dargestellt, wobei die Unterlegscheibe 44 auf einer Eindrehung der Büchse aufgesetzt und dann mit der Büchse verstemmt ist. Es ist ersichtlich, daß auch eine vollkommen einstückige Herstellung dieses Bauteils 42, 44 möglich ist.

## Patentansprüche

1. Hohlraum-Anker (10) mit einem zumindest über einen Teil seiner Länge mit Gewinde versehenen Ankerbolzen (20), an dessen im Hohlraum zu verankerndem Ende ein langgestrecktes Verriegelungselement (22) zwischen zwei langgestreckten parallelen, an ihrem Verriegelungselement abgewandten Ende durch einen Steg (26) verbundenen Laschen (24) zwischen einer zum Ankerbolzen (20) fluchtend ausgerichteten Einführstellung und einer quer zum Ankerbolzen (20) verlaufenden Verriegelungsstellung verschwenkbar gehaltert ist, wobei das Verriegelungselement (22) von einer Gewindebohrung (38) durchsetzt wird, deren Mittelachse in der Verriegelungsstellung mit der Längsmittelachse des Ankerbolzens (20) fluchtet,
**dadurch gekennzeichnet,**
daß im Steg (26) eine Gewindebohrung (28) vorgesehen ist, in welche das mit Gewinde versehene Vorderende des Ankerschafts (20) eingeschraubt ist.

2. Hohlraum-Anker nach Anspruch 1, dadurch gekennzeichnet, daß das Verriegelungselement (22) von einem langgestreckten, in der Draufsicht im wesentlichen rechteckigen Abschnitt eines auch im Querschnitt rechteckigen Metallprofils gebildet wird, daß die freien Enden der Laschen (24) die seitlichen Begrenzungsflächen des Metallprofil-Abschnitts in dessen mittlerem Bereich übergreifen und verschwenkbar haltern, und daß die Gewindebohrung (38) den Metallprofil-Abschnitt in dessen mittlerem Bereich rechtwinklig zur Schwenkachse von der oberen zur unteren Flachseite mittig durchsetzt.

3. Hohlraum-Anker nach Anspruch 2, dadurch gekennzeichnet, daß wenigstens eine der querverlaufenden Stirnflächen des das Verriegelungselement (22) bildenden Metallprofil-Abschnitts als zu den Flachseiten geneigt verlaufende Anlauf-Schrägfläche (32) für das durch den Laschen-Steg (26) geschraubte Vorderende des Ankerbolzens (20) ausgebildet ist.

4. Hohlraum-Anker nach Anspruch 3, dadurch gekennzeichnet, daß die Anlauf-Schrägfläche (26) unter einem Winkel von 40 bis 50⁰, vorzugsweise unter etwa 45⁰, zu den Flachseiten des das Verriegelungselement (22) bildenden Metallprofil-Abschnitts verläuft.

5. Hohlraum-Anker nach einem der Ansprüche 1 bis 4, dadurch gekennzeichnet, daß der Ankerbolzen (20) in seinem durch den Laschen-Steg (26) geschraubten vorderen Endbereich mit einem gewindelosen Abschnitt (34) versehen ist, dessen Durchmesser etwa dem Kerndurchmesser des Gewindes des Ankerbolzens (20) entspricht.

6. Hohlraum-Anker nach Anspruch 5, dadurch gekennzeichnet, daß die Länge des gewindelosen Abschnitts (34) des Ankerbolzens (20) wenigstens gleich der zwischen den Flachseiten gemessenen Dicke des das Verriegelungselement (22) bildenden Metallprofil-Abschnitts, vorzugsweise etwas länger als diese Dicke ist.

7. Hohlraum-Anker nach Anspruch 5 oder 6, dadurch gekennzeichnet, daß das freie Ende des gewindelosen Abschnitts (34) sich kegelförmig (36) verjüngt.

8. Hohlraum-Anker nach einem der Ansprüche 4 bis 7, dadurch gekennzeichnet, daß die Gewindebohrung (38) im Verriegelungselement (22) wenigstens an dem in der infolge des schrägen Verlaufs der Anlauf-Schrägfläche (26) des Metallprofil-Abschnitts kürzeren Flachseite mündenden Ende (bei 40) angesenkt ist.

9. Hohlraum-Anker nach einem der Ansprüche 2 bis 8, dadurch gekennzeichnet, daß die Schwenkachse des Verriegelungselements (22) und die Längsmittelachse der im Verriegelungselement (22) vorgesehenen Gewindebohrung (38) etwas zueinander versetzt sind, so daß sie sich nicht schneiden.

10. Hohlraum-Anker n ach einem der Ansprüche 3 bis 9, dadurch gekennzeichnet, daß die Länge der Laschen (24) so gewählt ist, daß der Metallprofil-Abschnitt in eine Lage zwischen den Laschen (24) verschwenkbar ist, in welcher die seitlichen Begrenzungsflächen fluchtend zwischen den Laschen (24) liegen und die Anlauf-Schrägfläche (32) am durch die Gewindebohrung im Laschen-Steg (26) durchgeschraubten Vorderende des Ankerbolzens (20) anliegt.

11. Hohlraum-Anker nach einem der Ansprüche 1 bis 10, gekennzeichnet durch eine auf das verriegelungselementabgewandte Ende des Ankerbolzens (20) aufschiebbare Büchse (42) mit einem dem Außendurchmesser des Gewindes des Ankerbolzens (20) entsprechenden bzw. geringfügig größeren Innendurchmesser und einem dem Durchmesser der Befestigungsbohrung (18), in welcher der Hohlraum-Anker (10) gesetzt werden soll, entsprechenden bzw. geringfügig kleineren Außendurchmesser, die an ihrem verriegelungselementabgewandten Ende mit einer Unterlegscheibe (44) zu einer integralen Einheit verbunden ist, deren Außendurchmesser größer als der Durchmesser der Befestigungsbohrung (18) ist.

## Claims

1. Toggle bolt (10) with an anchor bolt (20) provided with threads over a portion of its length, on whose end to be anchored in the cavity an elongated toggle is mounted pivotally for rotation between two elongated parallel legs (24) joined by a bridge (26) at their end remote from the toggle, between an insertion position in alignment with the anchor bolt and a locking position transversely of the anchor bolt, the toggle (22) being pierced by a threaded bore (38) whose central axis is in line in the locking position with the longitudinal central axis of the anchor bolt (20), characterized in that a threaded bore (28) is provided in the bridge (26), into which the threaded leading end of the anchor shaft (20) is driven.

2. Toggle bolt according to claim 1, characterized in that the toggle (22) is formed by an elongated section, substantially rectangular in plan, of a metal piece also rectangular in cross section, that the free ends of the legs (24) straddle the lateral defining surfaces of the metal piece in its middle section and hold it for pivoting, and that the threaded bore (38) passes centrally through the metal piece in its middle area at right angles to the pivot axis, from the top to the bottom flat side.

3. Toggle bolt according to claim 2, characterized in that at least one of the transversely disposed faces of the metal piece forming the toggle (22) is configured as a ramp surface (32), running at an angle to the flat sides, for the front end of the anchor bolt (20) screwed through the leg crosspiece (26).

4. Toggle bolt according to claim 3, characterized in that the ramp surface (26) is at an angle of 40 to 50 degrees, preferably about 45 degrees, to the flat sides of the metal piece forming the toggle (22).

5. Toggle bolt according to any one of claims 1 to 4, characterized in that the anchor bolt (20) is provided in its front end area that is screwed through the bridge (26) between the legs with an unthreaded section (34) whose diameter corresponds approximately to the root diameter of the thread of the anchor bolt (20).

6. Toggle bolt according to claim 5, characterized in that the length of the unthreaded section (34) of the anchor bolt (20) is at least equal to the thickness of the metal piece forming the toggle, measured between the flat sides, and preferably slightly longer than this thickness.

7. Toggle bolt according to claim 5 or 6, characterized in that the free end of the unthreaded section (34) tapers conically (36).

8. Toggle bolt according to any one of claims 4 to 7, characterized in that the threaded bore (38) in the toggle (22) is countersunk at least at the end (at 40) opening at the flat side that is shorter due to the slope of the ramp surface (26) of the metal piece.

9. Toggle bolt according to any one of claims 2 to 8, characterized in that the pivot axis of the toggle (22) and the longitudinal central axis of the threaded bore (38) provided in the toggle are slightly offset from one another so that they do not intersect.

10. Toggle bolt according to any one of claims 3 to 9, characterized in that the length of the legs (24) is selected such that the metal piece can pivot to a position between the legs (24) in which the lateral boundary surfaces lie flush between the legs (24) and the ramp surface (32) comes in contact with the front end of the anchor bolt (20) screwed through the threaded bore in the leg crosspiece (26).

11. Toggle bolt according to any one of claims 1 to 10, characterized by a collar (42) which can be slipped onto the end remote from the toggle of the anchor bolt and has an inside diameter corresponding to or slightly larger than the outside diameter of the thread of the anchor bolt (20), and an outside diameter corresponding to or slightly smaller than the diameter of the mounting hole (18) in which the toggle bolt (10) is to be set, and which [collar] is combined into an integral unit with a washer (44) at its end remote from the toggle, whose outside diameter is greater than the diameter of the mounting hole (18).

## Revendications

1. Elément d'ancrage pour espace vide (10), avec un boulon d'ancrage (20), pourvu d'un filetage sur au moins une partie de sa longueur et à l'extrémité, à ancrer dans la cavité, duquel un élément de verrouillage (22) allongé est fixé, entre deux pattes (24) allongées parallèles, reliées par une âme (26) à leurs extrémités opposées à l'élément de verrouillage, de façon à pouvoir pivoter entre une position d'introduction, orientée de façon alignée par rapport au boulon d'ancrage (20), et une position de verrouillage, transversal par rapport au boulon d'ancrage (20), l'élément de verrouillage (22) étant traversé par un trou taraudé (38), dont l'axe est aligné, en position de verrouillage, par rapport à l'axe du boulon d'ancrage (20), caractérisé en ce que dans l'âme (26) est prévu un trou taraudé (28), dans lequel l'extrémité avant, pourvue d'un filetage, du fût d'ancrage (20) est vissée.

2. Elément d'ancrage pour espace vide (10) selon la revendication 1, caractérisé en ce que l'élément de verrouillage (22) est formé par un tronçon allongé, sensiblement rectangulaire en vue de dessus, d'un profilé métallique à section transversale rectangulaire, en ce que les extrémités libres des pattes (24) enchâssent et maintiennent, de façon à permettre le pivotement, les faces latérales de limitation du tronçon de profilé métallique, et en ce que le taraudage (38) traverse le tronçon de profilé métallique dans sa zone centrale, perpendiculairement à l'axe de pivotement, de la face plane supérieure à la face plane inférieure.

3. Elément d'ancrage pour espace vide (10) selon la revendication 2, caractérisé en ce qu'au moins l'une des faces frontales transversales du tronçon de profilé métallique, formant l'élément de verrouillage (22) est réalisé sous forme de surface oblique de franchissement (32), pour l'extrémité avant, vissée à travers l'âme (26) des pattes, du boulon d'ancrage (20), surface s étendant inclinée par rapport aux faces planes.

4. Elément d'ancrage pour espace vide (10) selon la revendication 3, caractérisé en ce que la surface oblique de franchissement (26) s'étend suivant un angle de 40 à 50°, de préférence d'un angle de 45°, par rapport aux faces planes du tronçon de profilé métallique formant l'élément de verrouillage (22).

5. Elément d'ancrage pour espace vide (10) selon l'une des revendications 1 à 4, caractérisé en ce que le boulon d'ancrage (20) est pourvu, dans sa zone d'extrémité avant vissée à travers l'âme de patte (26), d'un tronçon (34) non fileté, dont le diamètre correspond peu près au diamètre de noyau de filetage du boulon d'ancrage (20).

6. Elément d'ancrage pour espace vide (10) selon la revendication 5, caractérisé en ce que la longueur du tronçon non fileté (34) du boulon d'ancrage (20) est au moins égale à l'épaisseur, mesurée entre les faces planes, du tronçon de profilé métallique formant l'élément de verrouillage (22), en étant de préférence d'une longueur un peu supérieure à cette épaisseur.

7. Elément d'ancrage pour espace vide (10) selon la revendication 5 ou 6, caractérisé en ce que l'extrémité libre du tronçon non fileté (34) va en s'effilant en forme de cône (36).

8. Elément d'ancrage pour espace vide (10) selon l'une des revendications 4 à 7, caractérisé en ce que le trou taraudé (38) ménagé dans l'élément de verrouillage (22) est chanfreiné au moins à l'extrémité (40) débouchant sur la face plane plus petite, du fait de l'obliquité de la surface de franchissement (32) du tronçon de profilé métallique.

9. Elément d'ancrage pour espace vide (10) selon l'une des revendications 2 à 8, caractérisé en ce que l'axe de pivotement de l'élément de verrouillage (22) et l'axe longitudinal du trou taraudé (38) prévu dans l'élément de verrouillage (322) sont un peu décalés l'un par rapport à l'autre, de sorte qu'ils ne se coupent pas.

10. Elément d'ancrage pour espace vide (10) selon l'une des revendications 3 à 9, caractérisé en ce que la longueur des pattes (24) est choisie telle que le tronçon de profilé métallique est susceptible de pivoter entre les pattes (24) dans une position dans laquelle les surfaces de délimitation latérales sont en alignement entre les pattes (24) et dans laquelle la surface oblique de franchissement (32) appuie sur l'extrémité avant, du boulon d'ancrage (20), vissée à travers le taraudage ménagé dans l'âme des pattes (26).

11. Elément d'ancrage pour espace vide (10) selon l'une des revendications 1 à 10, caractérisé par une douille (42), susceptible d'être enfichée sur l'extrémité, du boulon d'ancrage (20), opposée à l'élément de verrouillage, avec un diamètre intérieur correspondant au, ou légèrement supérieur au, diamètre extérieur de filetage du boulon d'ancrage (20), et un diamètre extérieur correspondant au, ou légèrement inférieur au, diamètre du trou de fixation (18) dans lequel l'élément d'ancrage pour espace vide (10) doit être posé, douille reliée, à son extrémité opposée à l'élément de verrouillage, à une rondelle (44), pour former un élément monobloc, dont le diamètre extérieur est supérieur au diamètre du trou de fixation (18).
